# EUROPEAN PATENT SPECIFICATION

(11) **EP 2 531 539 B1**
(45) Date of publication and mention of the grant of the patent: **24.04.2019**
(21) Application number: 11701286.4
(22) Date of filing: 31.01.2011
(51) Int. Cl.: C08G 59/14, C08G 59/42, C08G 63/672, C08L 63/00, C08L 67/06

(54) **RESIN COMPOSITION COMPRISING ISOSORBIDE CONTAINING SATURATED POLYMER**
HARZZUSAMMENSETZUNG, DIE EIN ISOSORBID ENTHALTENDES GESÄTTIGTES POLYMER UMFASST
COMPOSITION DE RÉSINE COMPRENANT UN POLYMÈRE SATURÉ CONTENANT D`ISOSORBIDE

(30) Priority: 01.02.2010 EP 10152256
(43) Date of publication of application: 12.12.2012
(73) Proprietor: ACR III B.V., 1118 BJ Schiphol (NL)
(72) Inventor: GORZOLNIK, Blazej, Michal, 48527 Nordhorn (DE); JANSEN, Johan, Franz, Gradus, Antonius, NL-6165 AP Geleen (NL); LAUTERWASSER, Frank, 6100 AA Echt (NL)
(74) Representative: De Clercq & Partners
(86) International application number: PCT/EP2011/051312
(87) International publication number: WO 2011/092328

(56) References cited:
- WO-A1-97/28211
- FR-A1- 2 927 903
- US-A1- 2002 115 817
- US-A1- 2009 281 230
- MAJDOUB M ET AL: "Nouveaux polyethers et polyesters a base d'isosorbide: synthese et caracterisation", EUROPEAN POLYMER JOURNAL, PERGAMON PRESS LTD. OXFORD, GB LNKD- DOI:10.1016/0014-3057(94)90274-7, vol. 30, no. 12, 1 December 1994 (1994-12-01), pages 1431-1437, XP024053303, ISSN: 0014-3057 [retrieved on 1994-12-01]

## Description

The present invention relates to resin compositions as described in claim 1, comprising (a) an unsaturated polyester resin and/or a vinyl ester resin, (b) a reactive diluent and (c) a saturated polymer soluble in the reactive diluent. The resin compositions according to the invention are suitable for being applied in structural applications in which surface properties and mechanical properties are important, such as for example gel coating, windmill blades and in particular highly demanding automotive applications. As used herein, suitable for structural applications means that the resin composition upon curing results in structural objects. As meant herein, structural objects are considered to have a thickness of at least 0.5 mm and appropriate (depending on the ultimate application of the structural object) mechanical properties.

The use of a saturated polymer in unsaturated polyester resin and/or vinyl ester resin compositions also comprising reactive diluent is well known in the art for improving the surface properties of structural objects obtained by curing the resin composition. One of the more demanding structural applications is the automotive industry, as in this application focus is not only on the mechanical properties but also on the surface quality of the structural object.

US2009/281230 pertains to low profile additives ("LPA") comprising branched polymers having a weight average molecular weight (Mw) of at least about 20,000 grams/mole and a number average molecular weight (Mn) of at least about 3,000 grams/mole and methods for making the LPAs. US2009/281230 further concerns compositions comprising LPAs synthesized from one or more difunctional monomers and one or more branching agents.

WO97/28211 pertains to a thermoplastic saturated polyester low profile additive (low profile additive) useful in sheet moulding compounds for parts, especially vehicle parts. The additive has a major component derived from aromatic compounds such as terephthalic acid including recycled polyethylene terephthalate.

US2002/115817 pertains to a copolyester of the reaction product of: (a) one or more aromatic dicarboxylic acids or an ester thereof, (b) one or more aliphatic dicarboxylic acids or an ester thereof, and (c) isosorbide.

A main disadvantage of the use of a saturated polymer as an anti-shrinkage additive is that the mechanical properties of the object obtained by curing the resin composition are negatively affected. Traditionally a gain in surface properties of a cured part is offset by a reduction in the mechanical properties of the cured part and vice versa.

The object of the present invention is to provide an anti-shrinkage additive that is able to provide an improvement of the surface properties of cured parts and which result in less decrease of the mechanical properties as compared to an anti-shrinkage additive that is able to provide a similar improvement of the surface properties.
The invention is encompassed in the appended claims.

It has now surprisingly been found that this could be achieved in that the saturated polymer soluble in the reactive diluent comprises isosorbide building blocks and has a number-average molecular weight Mₙ of at least 1500 Dalton. An additional advantage of the present invention is that the demolding of a cured part, obtained by moulding the resin composition according to the invention, becomes easier.

The number-average molecular weight (Mₙ) is determined in tetrahydrofuran using GPC employing polystyrene standards and appropriate columns designed for the determination of the molecular weights. Preferably, the saturated polymer comprising isosorbide building blocks has a number-average molecular weight Mₙ of at least 1600 Dalton, more preferably of at least 1700 Dalton and more preferably of at least 1800 Dalton. For the sake of clarity, in case a mixture of saturated polymers of different number-average molecular weights is applied, the average number-average molecular weight is higher than 1500 Dalton. Generally, the saturated polymer comprising isosorbide building blocks has a number-average molecular weight Mₙ less than 20000 Dalton. Preferably, the saturated polymer comprising isosorbide building blocks has a number-average molecular weight Mₙ less than 15000 Dalton and more preferably less than 10000 Dalton.

The amount of isosorbide in the saturated polymer, relative to the total weight of the saturated polymer, is preferably at least 5 wt.%, more preferably at least 10 wt.% and even more preferably at least 15 wt.%. The amount of isosorbide in the saturated polymer, relative to the total weight of the saturated polymer, is preferably at most 55 wt.%, more preferably at most 45 wt.% and even more preferably at most 35 wt.%. In a preferred embodiment, the amount of isosorbide in the saturated polymer, relative to the total weight of the saturated polymer, is from 5 up to 55 wt.%, preferably from 5 up to 45 wt.%, more preferably from 5 up to 35 wt.%, even more preferably from 10 up to 35 wt.% and most preferably from 15 up to 35 wt.%.

As meant herein, a saturated polymer does not have unsaturations that are reactive in the radical polymerization of the unsaturated polyester resin and/or vinyl ester resin. For the purpose of clarity, the saturated polymer may contain aromatic rings because such aromatic rings do not react in the radical polymerization.

The saturated polymer soluble in the reactive diluent is a saturated polyester because the solubility of a saturated polyester in mixtures of unsaturated polyester resins and/or vinyl ester resins with reactive diluent is in general higher than the solubility of other saturated polymers in such mixtures.

The saturated polyester is made by condensing at least a dicarboxylic acid or its anhydride with a diol. Such condensing is well known by those skilled in the art of polyester technology. Examples of dicarboxylic acid reactants include adipic acid, phthalic acid (anhydride), isophthalic acid and terephthalic acid. Apart from the isosorbide, examples of diol reactants include ethylene glycol, diethylene glycol, propylene glycol, dipropylene glycol, 2-methyl-1,3-propanediol, 1,4-butanediol and hexanediol. Such condensing may be followed by chain extension of the polyesters through their terminal hydroxyl or acid end groups with multifunctional isocyanates or epoxides to adjust the number-average molecular weight.

The saturated polyester comprises, next to the isosorbide building blocks, saturated aliphatic dicarboxylic acid building blocks and optionally other diol building blocks, for example ethylene glycol, propylene glycol, 1,3-propanediol, diethyleneglycol, dipropyleneglycol, dibutyleneglycol, neopentylglycol, 1,4-butanediol, 2,3-butanediol and mixtures thereof.

Preferably, the saturated aliphatic dicarboxylic acid has the following formula HOOC-(CH₂)ₓ-COOH, in which x is an integer from 1 up to 20. As used herein, for all upper and/or lower boundaries of any range given, the boundary value is included in the range. More preferably, x is 2, 3, 4, 5 or 6. Even more preferably, x is 4 (the aliphatic dicarboxylic acid then being adipic acid). The saturated polymer may contain other building blocks, such as hydroxyacid building blocks. The molar amount of isosorbide relative to the molar amount of aliphatic dicarboxylic acids is from 1:10 up to 10:1, more preferably from 1:2 up to 7:1 and even more preferably from 1:1 up to 5:1.

The saturated polyester may comprise other diol building blocks than isosorbide building blocks. The molar ratio of the total molar amount of hydroxyl groups relative to the total molar amount of acid groups is preferably from 1:10 up to 10:1, more preferably from 1:5 up to 5:1, even more preferably from 1:2 up to 2:1, even more preferably from 1:1,5 up to 1,5:1 and even more preferably from 1:1,3 up to 1,3:1.

The unsaturated polyester resin or vinyl ester resin used in the context of the present invention may be any such resin as is known to the person skilled in the art. Examples thereof can be found in a review article of M. Malik et al. in J.M.S. - Rev. Macromol. Chem. Phys., C40 (2&3), p.139-165 (2000). The authors describe a classification of such resins on the basis of their structure in five groups (page 141-142):
(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A.
(2) Iso-resins: these are prepared from isophthalic acid, maleic anhydride or fumaric acid, and glycols.
(3) Bisphenol-A-fumarates: these are based on ethoxylated bisphenol-A and fumaric acid.
(4) Chlorendics: these are resins prepared from chlorine/bromine containing anhydrides or phenols in the preparation of the unsaturated polyester (UP) resins.
(5) Vinyl ester (VE) resins: these are resins, which are mostly used because of their hydrolytic resistance and excellent mechanical properties. They have unsaturated sites only in the terminal position, for example introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used.

Besides these classes of resins also so-called pure maleic resins and so-called dicyclopentadiene (DCPD) resins may be used in the present invention. As used herein, unsaturated polyester resins include unsaturated polyester resins as described by M. Malik et al. in J.M.S. - Rev. Macromol. Chem. Phys., C40 (2&3), p.141-142 (2000), but also includes pure maleic resins, DCPD resins and hybrid unsaturated polyesters resins which contain epoxy or urethane linkages. Pure maleic resins (such as Palapreg P 18-21, Palapreg 0423-02, and Palapreg P18-03 of DSM Composite Resins, Schaffhausen, Switzerland) can very suitably be used in the context of the present invention. The same is true for all structural UP-resins and VE-resins with glass transition temperatures of the cured resins above 100 °C. As used herein, pure maleic resins means that the diacid that is used for preparing the unsaturated polyester is maleic acid, maleic anhydride and/or fumaric acid. Besides the vinyl ester resins as described in Malik et al., also the class of vinyl ester urethane resins (also referred to urethane (meth)acylate resins) can be distinguished as vinyl ester resins. As used herein, a vinyl ester resin is an oligomer or polymer containing at least one (meth)acrylate functional end group, also known as (meth)acrylate functional resins. This also includes the class of vinyl ester urethane resins (also referred to as urethane (meth)acrylate resins). Preferred vinyl ester resins are methacrylate functional resins including urethane methacrylate resins. Preferred methacrylate functional resins are resins obtained by reaction of an epoxy oligomer or polymer with methacrylic acid or methacrylamide, preferably with methacrylic acid.

The unsaturated polyester resin preferably has an acid value ranging from 20 up to 70 mg KOH/g (determined according to ISO 2114-2000).

Preferably, the composition according to the invention comprises an unsaturated polyester resin or a vinyl ester resin. More preferably, the composition according to the invention comprises an unsaturated polyester resin. Preferably the curable resin in the resin composition according to the invention is an unsaturated polyester resin and more preferably a pure maleic resin, as the use of an unsaturated polyester resin and in particular the use of a pure maleic resin results in that cured parts with class A surface properties and suitable mechanical properties can more easily be obtained.

The resin composition according to the invention comprises a reactive diluent. The diluent, for instance, will be applied for adjustment of the viscosity of the resin composition in order to make handling thereof more easy. For clarity, a reactive diluent is a diluent that is able to copolymerize with the unsaturated polyester resin and/or vinyl ester resin present in the composition according to the invention. Examples of suitable monomers acting as reactive diluents are, for instance, alkenyl aromatic monomers such as for example styrene and divinylbenzene but all other reactive monomers for use in the field of thermosetting resins as are known to the person skilled in the art can be used. Preferred monomers are styrene, alpha-methyl styrene, chlorostyrene, vinyl toluene, divinyl benzene, diester of itaconic acid such as for example dimethyl itaconate, methyl methacrylate, tert.butyl styrene, tert.butylacrylate, butanediol dimethacrylate and mixtures thereof. Preferably, the composition comprises a methacrylate containing compound and/or styrene as reactive diluent. More preferably, the composition comprises styrene as reactive diluent. Even more preferably, the reactive diluent in the composition is styrene.

The saturated polymer comprising isosorbide building blocks and having a molecular weight of at least 1500 Dalton, which is present in the resin composition according to the invention, needs to be soluble in the reactive diluent present in the resin composition according to the invention. Soluble means a solubility of at least 10 g of saturated polymer per liter of reactive diluent at 23 °C and atmospheric pressure, preferably at least 50 g/liter and more preferably at least 100 g/liter. Preferably, the saturated polymer is soluble in the mixture of component (a), i.e. the unsaturated polyester resins and vinyl ester resins, and component (b), i.e. the reactive diluent, of the resin composition according to the invention. Soluble means then a solubility of at least 10 g of saturated polymer per liter of a 1:1 mixture of (a) and (b) at 23 °C and atmospheric pressure, preferably at least 50 g/liter and more preferably at least 100 g/liter.

Preferably, at least a part of the saturated polymer comprising isosorbide building blocks and having a molecular weight of at least 1500 Dalton has a bimodal molecular weight distribution. More preferably, the saturated polymer comprising isosorbide building blocks and having a molecular weight of at least 1500 Dalton has a bimodal molecular weight distribution. Preferably, the bimodal distribution is obtained by chain extension. It has surprisingly been found that the use of a saturated polymer with a bimodal molecular weight distribution obtained by chain extension results in a further increase of the mechanical properties without substantially negatively affecting the surface properties. Furthermore an additional advantage of the use of a saturated polymer with a bimodal molecular weight distribution obtained by chain extension is that the time to prepare such a polymer is much shorter than for a polymer with a similar number-average molecular weight but not obtained by applying chain extension. The chain extension is preferably obtained with a diepoxide. Preferred diepoxides are the glycidyl ethers of bisphenol-A. The preferred diepoxide is the diglycidyl ether of bisphenol-A.

The composition according to the invention preferably comprises a saturated polymer having the following structure 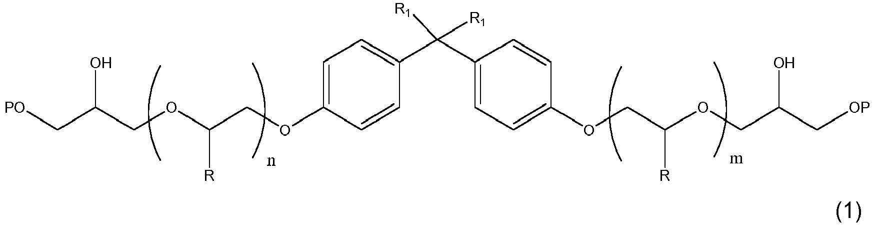 in which R, R₁=H or CH₃; n, m is an integer from 0 up to 20 and P= polymer containing isosorbide building blocks.

Preferably n+m is an integer from 0 up to 8. R is preferably H. R₁ is preferably CH₃. n and m are preferably 0. Preferably P further contains adipic acid building blocks. The polymer P preferably has a molecular weight Mₙ of from 750 up to 10000 Daltons and the chain extended polymer according to formula (1) preferably has a molecular weight Mₙ of from 1850 up to 21000 Daltons.

The present invention as described in claim 1, therefore also relates to a resin composition comprising (a) an unsaturated polyester resin and/or a vinyl ester resin, (b) a reactive diluent and (c) a saturated polymer having a structure according to formula (1).

The resin composition according to the invention may further comprise a saturated polymer that does not comprise isosorbide building blocks.

The maximum amount of saturated polymer that does not comprise isosorbide building blocks is such that the object of the present invention can still be achieved. The maximum amount of saturated polymer that does not comprise isosorbide building blocks is preferably less than 90 wt.% of the total amount of saturated polymers, more preferably less than 70 wt.% and even more preferably less than 50 wt.%.

The resin compositions according to the invention have shrink-controlled properties and are suitable for use in sheet moulding compounds and bulk moulding compounds (SMCs and BMCs) comprising (a) an unsaturated polyester resin and/or a vinyl ester resin; (b) a reactive diluent and (c) a saturated polymer comprising isosorbide building blocks and a molecular weight Mₙ of at least 1500 Dalton as anti-shrinkage additive. Such resin compositions usually further comprise (d) a radical initiator, preferably a peroxide ; (e) a thickening agent; (f) fibrous reinforcement material; and optionally one or more other components selected from the group of (g) a mould release agent; (h) wetting and viscosity reducing agents; and (i) fillers. The thermosetting resin compositions according to the invention are thermally curable, i.e. thermosetting resin compositions that can be cured by subjecting the resin compositions to a heat treatment. More particularly, the present invention relates to such thermally cured resin compositions having Class A properties, especially Class A SMC compounds.

As meant herein, the term "shrink-controlled" reflects that the shrinkage of the resin composition upon curing, under both standard compression and injection moulding conditions, which generally includes temperatures of 140 to 170°C and pressures of 5 to 10 MPa, is in the range of from +1% to -0.1%. Within said broadest range, narrower sub-ranges can be distinguished. The person skilled in the art in the field usually defines such ranges and sub-ranges, as
(i) low-shrink (this is the broadest range of shrinkage, ranging from +1% to -0.1% shrinkage upon curing);
(ii) low-profile (this is the range of shrinkage from +0.2% to -0.05% shrinkage upon curing);
(iii) Class A (this is the narrowest range of shrinkage, ranging from +0.01% to -0.09% shrinkage upon curing).

It is to be noticed, that negative values of shrinkage correspond to (slight) expansion. There exists a vast amount of literature regarding shrinkage of unsaturated polyester resins, use of anti-shrinkage additive and in particular use of low profile additives (herein after referred to as LPAs) for shrinkage control, and mechanisms of shrinkage. Reference, for instance can be made to the following literature:
- Atkins, K.E., in Paul D.R. and Newman S., editors, Polymer blends, Vol.2, New York, Academic Press (1978), p.391;
- Han, C.D. et al., in J. Appl. Polym. Sci., 28 (1983), p.743;
- Meyer, R.W., Handbook of pultrusion technology, New York, Chapman and Hall (1988), p.62;
- Bartkus, E.J et al., in Applied. Polymer. Symp., No. 15, page 113 (1970);
- Pattison, V.A. et al., in J. Appl. Polym. Sci., 18 (1974), p.2763;
- Hsu, C.P. et al., in J. Appl. Polym. Sci., 31 (1991), p.1450;
- Suspene, L. et al., in Polymer 32 (1991), p.1594;
- Huang, Y.J. et al., in J. Appl. Polym. Sci., 55 (1995), p.323;
- Huang, Y.J. et al., in Polymer 37 (1996), p.401.

The relative amounts of component (a), (b) respectively (c) in the composition according to the invention (whereby the total amount of (a), (b) and (c) is considered 100 wt.%) is preferably from 10 up to 70 wt.% of (a), from 5 up to 50 wt.% of (b) and from 2 up to 70 wt. % of (c).

The composition according to the invention preferably further comprises fibrous reinforcement material, a filler, a thickening agent, a mould release agent and/or a wetting agent. A person skilled in the art knows which ranges can be applied for the components of the curable resin composition of the present invention. Suitable ranges are: 5-35 wt% unsaturated polyester resin and/or vinyl ester, 25-75 wt% reactive diluent, 0,1-10 wt% saturated polymer as anti-shrinkage additive and optional 0-55 wt% filler and 20-50 wt% fibrous reinforcement material (relative to the total resin composition).

Finally, the present invention relates to parts produced from the resin compositions according to the invention by means of sheet moulding or bulk moulding. The parts according to the invention are very suitable for being applied in the automotive industries. In a typical sheet moulding compound (SMC) or bulk moulding compound (BMC) used in the automotive industries the unsaturated polyester resin component represents about 10 to 15% by weight of the total formulation.

The present description further relates to a polymer containing isosorbide building blocks according to the following structure 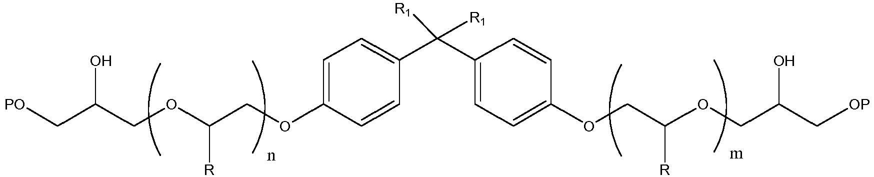 in which R, R₁=H or CH₃; n, m is an integer from 0 up to 20 and P= saturated polyester containing isosorbide building blocks.

Preferably n+m is an integer from 0 up to 8. R is preferably H. R₁ is preferably CH₃. n and m are preferably 0. Preferably P further contains adipic acid building blocks. The polymer P preferably has a molecular weight Mₙ of from 750 up to 10000 Daltons and the chain extended polymer according to formula (1) preferably has a molecular weight Mₙ of from 1850 up to 21000 Daltons. The present description also relates to the use of such saturated polymers containing isosorbide building blocks as anti-shrinkage additive in resin compositions containing an unsaturated polyester resin and/or or a vinyl ester resin and a reactive diluent.

The present invention preferably further relates to a process for radically curing an unsaturated polyester resin and/or vinyl ester resin composition according to the invention wherein the process comprises (i) combining the unsaturated polyester resin and/or vinyl ester resin composition with an initiator for the radical polymerisation, preferably a peroxide, and then (ii) radically curing the resin composition. The amount of peroxide can be varied within wide ranges, in general less than 20 wt.%, and preferably less than 10 wt.% (wherein the amount of peroxide is relative to the total amount of (a), (b) and (c)). Preferably, the curing is effected by moulding at increased temperature, more preferably the curing is effected by compression moulding to obtain in particular a SMC or BMC part, preferably a SMC or BMC part with class A surface.

The present invention furthers relates to a cured part obtained by radically curing a composition according to the invention, preferably the curing is effected by compression molding. In particular, the present invention also relates to a SMC or BMC part obtained by thermally curing a composition according to the invention in a SMC or BMC mould.

The invention is now being demonstrated by means of a series of examples, but is not restricted in any way to the embodiments shown in the examples.

### EXAMPLES and EXPERIMENTS

### Experimental

### Molecular weight determination

The molecular weights of synthesized polyesters were obtained from Gel Permeation Chromatography (GPC) with tetrahydrofuran as the eluent. Calibration curves were obtained with polystyrene standards at room temperature.

Analysis was performed on a system equipped with a Waters 510 pump, three PL gel 5µm mixed-C columns (Polymer Laboratories, designed for low molecular weights), and a Waters 410 refractive index detector.

### Mechanical properties

Mechanical properties of the cured objects were determined according to ISO 178 and ISO 527-2 using universal testing machine (Franke Type 81205).

### Acid Value

The acid values of the resins were determined titrimetrically with a potentio-metric titrator (Titrino 798, Metrohm) according to ISO 2114-2000.

### Melting point

The melting temperature was obtained using differential scanning calorimetry (DSC) analysis (Mettler, DSC 821e). Two runs were performed (start temp. 130°C, end temp. 220°C) with a heating ratio 5°C/min. The melting point was obtained from the peak value of the endotherm from the second run.

### Melt viscosity measurements

Melt viscosity measurements were performed with Brookfield CAP 2000 viscosimeter (cone/plate method; 750 rpm, 210°C, cone 4).

### Finished resin viscosity measurements

The viscosity of resin dissolved in styrene was determined at 23°C according to ISO 3219, using a Physica MC1 viscometer.

### Shrinkage

The shrinkage of the molded parts was determined as linear shrinkage using a precision measuring unit Electronic Scale from Time Electronic. Shrinkage of 0% is no shrinkage. A positive value means shrinkage and a negative value means expansion.

### Surface properties

Long term waviness, short term waviness, fibre print-through, homogeneity and gloss were visibly judged. A value of 1 means very good and a value of 6 means very bad.

### Syntheses of saturated polyesters

### Synthesis of isosorbide containing polyester resin A.

A 6 liter round bottom glass flask, equipped with nitrogen inlet, Vigreaux column and mechanical stirrer was charged with 2411 g of adipic acid, 806 g of propylene glycol and 864 g of isosorbide. The flask was purged with nitrogen and 1.7 g of butylhydroxyoxostannane, 0.04 g of lithium hydroxide and 0.3 g of hydroquinone were added. The temperature was slowly raised to 135°C during 1 hr, and then slowly raised to 200°C during 1hr followed by maintaining the temperature at 200°C during 30 minutes. Next the temperature was increased to 210°C 0.5 hr and maintained at 210°C until acid value of 12 mg KOH/g was reached which took approximately 30 hours. After that the temperature was lowered to 120°C and 0.42 g of 2-methylhydroquinone as well 1400 g of styrene was added. The number-average molecular weight (Mₙ) of the resin was Mₙ = 2100 Dalton with a polydispersity index (PDI) of 4.2. The resin dissolved in styrene had viscosity of 2.4 Pa.s at 23 °C.

### Synthesis of a bimodal isosorbide containing polyester resin by chain extension B

8184 g of adipic acid, 2672 g of propylene glycol and 2932g of isosorbide were introduced to the 12 liter stainless steal reactor, equipped with nitrogen inlet, Vigreaux column and mechanical stirrer. The reactor was purged with nitrogen then 6.1 g of butylhydroxyoxostannane, 0.13 g of lithium hydroxide and 1.2 g of hydroquinone were added. The flask was then heated to 140 °C in 1h. The temperature was kept at 140°C for 2h and then was raised to 150 °C in 1h, increased from 150 to 210 °C over a period of 3h and finally kept at 210 °C until the acid value was equal to 32 mgKOH/g.

After that 836 g of bisphenol-A diglycidylether was introduced to the reactor and the chain extension reaction was performed at 160 °C until acid value of 10.7 mgKOH/g was reached which takes approximately 7 hours. The polyester was transferred to the mixer filled with 1.6 g of 2-methylhydroquinone and 5200 g of styrene. The number-average molecular weight (Mₙ) of the resin was 2100 Dalton with a PDI of 3.6. The resin dissolved in styrene had viscosity of 3 Pa.s at 23 °C.

### Synthesis of isosorbide containing polyester resin C

A 6 liter round bottom glass flask, equipped with nitrogen inlet, Vigreaux column and mechanical stirrer was charged with 2411 g of adipic acid, 787 g of propylene glycol and 864g of isosorbide. The flask was purged with nitrogen then 1.7 g of butylhydroxyoxostannane, 0.04 g of lithium hydroxide and 0.3 g of hydroquinone were added. The flask was then heated to 140 °C in 1h with electrical heating mantle controlled by the time/temperature programmable controller. The temperature was kept at 140 °C for 2h and then was raised to 150 °C over a period of 1h, increased from 150 to 210 °C over 3h and finally kept at 210 °C until acid value equal to 32 mgKOH/g was reached. After that the temperature was lowered to 120 °C and 0.42 g of 2-methylhydroquinone as well 1400 g of styrene was added. The mixture was stirred for 3h to completely homogenize. The number-average molecular weight (Mₙ) of the resin was 1400 Dalton with a PDI of 2.45. The resin dissolved in styrene had viscosity of 0.9 Pa.s at 23 °C.

### Synthesis of isosorbide containing polyester resin D

1942 g of dimethylterephtalate, 2073 g of 1,4 - butylenediol and 291 g of isosorbide were introduced to the 6 liter round bottom glass flask, equipped with nitrogen inlet, Vigreaux column and mechanical stirrer. The reactor was purged with nitrogen then 2.01 g of titanium (IV) butoxide was added. The temperature was slowly raised to 135°C during 1 hr, then slowly raised to 200 °C during 1hr followed by maintaining the temperature at 200°C during 30 minutes. Next the temperature was increased to 250°C during 1.5 hr and maintained at 250 °C during 2 hrs, after which a melt viscosity of 0.55 Pa.s at 210 °C was obtained. After which the solid resin with a melting point of 200 °C was allowed to cool down to room temperature. This solid resin did not dissolve in styrene or methyl methacrylate or butanedioldimethacrylate, nor in mixtures of unsaturated polyester resin or vinyl ester resin with these reactive diluents.

### Resin E

Besides the resins described above also Palapreg H2681-01 (DSM Composite Resins, Schaffhausen, Switzerland), a saturated polyester with an Mₙ of 1900 Dalton which can generally be used as LPA additive, was evaluated for comparative purposes.

### Synthesis of a bimodal isophthalic acid containing polyester resin by chain extension (resin F) analogous to low profile additive # 1 of WO97/28211

A 6 liter round bottom glass flask, equipped with nitrogen inlet, Vigreaux column and mechanical stirrer was charged with 2448g of isophtalic acid, 239 g of adipic acid, 885g of 2-methyl 1,3-propanediol, 435 g of diethylene glycol, 112g of ethane diol and 261g of polyethylene glycol 400. The flask was purged with nitrogen and was then heated slowly to 225 °C with electrical heating mantle controlled by the time/temperature programmable controller. The temperature was kept for about 10 hrs at 225 °C until acid value equal to 26 mg KOH/g was reached.

After that temperature was reduced to 170°C and 197g of bisphenol-A diglycidylether was introduced to the reactor and the chain extension reaction was performed for 45 minutes until acid value of 10.9 mgKOH/g was reached. After that the temperature was lowered to 140 °C and 1,6 g of tert-buthyl catechol as well 3200 g of styrene was added. The mixture was stirred for 5h to completely homogenize. The number-average molecular weight (Mₙ) of the resin was 4800 Dalton with a PDI of 2.3. The resin dissolved in styrene had viscosity of 0,6 Pa.s at 23 °C.

### Preparation of SMC formulation

The SMC formulations were prepared as follows: 30 parts of the solution of saturated polyester in styrene as LPA, 60 parts of Palapreg P 18-03 (unsaturated polyester resin in styrene, DSM Composite Resins, Schaffhausen, Switzerland), 10 parts of Palapreg H 1080-01 (PVAc in styrene, DSM Composite Resins, Schaffhausen, Switzerland), 5 parts of styrene (BASF), 1 part of Trigonox 117 (Akzo nobel, Curing agent) 200 parts of Milicarb (Omya UK, Filler), 2.2 parts Byk W9010 (BYK Chemie, viscosity reducer) and 2.5 parts Luvatol MK35 (Lehmann & Voss, Germany, Thickening agent) were mixed. To this mixture was added 28wt% Glass fiber (P204, 26 mm, OCV, France).

The formulations were molded and cured in the mold (100 bar, 180 seconds, 145 °C (matrix mould-half)/150 °C (matrix mould-half). After curing the surface properties and the mechanical properties were evaluated. The results are shown in table 1.

**Table 1 properties of the molded parts**

| | Example 1 | Example 2 | Comp exp A | Comp exp B | Comp exp C | Comp exp D |
|---|---|---|---|---|---|---|
| Saturated polyester resin | A | B | E | C | D | F |
| Mₙ of the saturated polyester resin (Dalton) | 2100 | 2100 | 1900 | 1400 | unknown | 4800 |
| Solubility in styrene | + | + | + | + | - | + |
| Shrinkage (%) | -0.057 | -0.069 | -0.089 | 0.016 | - | 0.031 |
| Long term waviness (LTW) | 2,5 | 3 | 2 | 3,5 | - | 4 |
| Short Term Waviness (STW) | 3 | 3 | 2 | 6 | - | 5 |
| Fibre print-through | 3 | 3 | 2 | 5 | - | 4,5 |
| Homogeneity | 2,5 | 3 | 2 | 3 | - | 3,5 |
| Gloss | 2,5 | 2,5 | 2 | 4 | - | 3,5 |
| Defects | none | none | none | Mat areas Blisters | - | None |
| Overall surface quality rating | Good (class A) | Good (class A) | Good (class A) | Bad | - | Moderate (low profile) |
| Flexural strength [ N/mm² ] | 129.30 | 141.10 | 113.30 | 154.70 | - | 170,8 |
| E- Modulus [kN/mm²] | 9.5 | 10.3 | 7.7 | 10.1 | | 10,3 |

From this table it is evident that the polymer containing isosorbide building blocks must be able to dissolve in the reactive diluent (comparative experiment C) as otherwise the mixture can not be used for the preparation of homogenous molded parts.

Furthermore the molecular weight (Mₙ) of the isosorbide containing polymer must be > 1400 (Comparative experiment B) as otherwise a very poor surface is obtained. Comparing comparative experiment A with examples 1 and 2 clearly shows the improvement of mechanical properties as illustrated by the Flexural strength and the E-modulus while the surface quality is maintained (all have class A rating).

Comparing example 1 and 2 shows the additional beneficial effect on the mechanical properties when employing a bimodal isosorbide containing polyester.

Comparing comparative experiment D with comparative experiment A shows that improved mechanical properties can be obtained by using specific saturated polyesters not containing isosorbide building blocks, however the surface quality then becomes worse.

It should be noted that of the resins tested in a SMC (resins A, B, C, E and F), only resin F has sufficient mechanical properties to allow tensile testing.

Further, the demolding (removing from the mould) of molded parts obtained in example 1 and 2 was much easier compared to demolding of molded parts obtained in comparative experiments A, B and D.

## Claims

1. A resin composition comprising (a) an unsaturated polyester resin and/or a vinyl ester resin, (b) a reactive diluent and (c) a saturated polymer soluble in the reactive diluent whereby soluble means a solubility of at least 10 g of saturated polymer per liter of reactive diluent at 23 ºC and atmospheric pressure, **characterized in that** the saturated polymer is a saturated polyester which comprises isosorbide building blocks, other diol building blocks and saturated aliphatic dicarboxylic acid building blocks, whereby the molar amount of isosorbide relative to the molar amount of aliphatic dicarboxylic acids is from 1:10 up to 10:1 and which saturated polyester has a number-average molecular weight Mₙ of at least 1500 Dalton. as determined by the measurement method disclosed in the description

2. A resin composition according to claim 1, **characterized in that** the saturated aliphatic dicarboxylic acid has the following formula HOOC-(CH₂)ₓ-COOH, in which x is an integer from 1 up to 20.

3. A resin composition according to claim 2, **characterized in that** x is 4.

4. A resin composition according to any one of claims 1-3, **characterized in that** the resin composition comprises an unsaturated polyester resin.

5. A resin composition according to any one of claims 1-4, **characterized in that** the saturated polymer has a bimodal molecular weight distribution obtained by chain extension.

6. A resin composition according to any one of claims 1-5, **characterized in that** the composition comprises a saturated polymer having the following structure 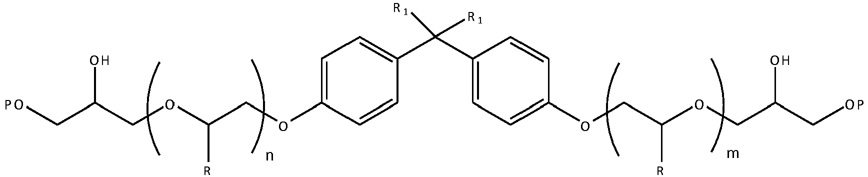 in which R, R₁=H or CH₃; n, m is an integer from 0 up to 20 and P= polymer containing isosorbide building blocks.

7. A resin composition according to any one of claims 1-6, **characterized in that** the composition comprises from 10 up to 70 wt.% of component (a), from 5 up to 50 wt.% of component (b) and from 2 up to 70 wt. % of component (c) (whereby the total amount of (a), (b) and (c) is considered 100 wt.%).

8. Process for radically curing an unsaturated polyester resin and/or vinyl ester resin composition according to any one of claims 1-7, **characterized in that** the process comprises (i) combining the unsaturated polyester resin and/or vinyl ester resin composition with a radical initiator and then (ii) radically curing the resin composition.

9. Process according to claim 8, **characterized in that** the curing is effected by compression moulding.

10. A cured part obtained by the process according to claim 8 or 9.

## Patentansprüche

1. Harzzusammensetzung, umfassend (a) ein ungesättigtes Polyesterharz und/oder ein Vinylesterharz, (b) ein reaktives Verdünnungsmittel und (c) ein in dem reaktiven Verdünnungsmittel lösliches gesättigtes Polymer, wobei löslich eine Löslichkeit von mindestens 10 g gesättigtem Polymer pro Liter reaktivem Verdünnungsmittel bei 23°C und Normaldruck bedeutet, **dadurch gekennzeichnet, dass** es sich bei dem gesättigten Polymer um einen gesättigten Polyester handelt, der Isosorbid-Bausteine, andere Diol-Bausteine und Bausteine einer gesättigten aliphatischen Dicarbonsäure umfasst, wobei die molare Menge an Isosorbid, bezogen auf die molare Menge aliphatischer Dicarbonsäuren, 1:10 bis 10:1 beträgt und wobei der gesättigte Polyester ein zahlenmittleres Molekulargewicht Mₙ von mindestens 1500 Dalton, bestimmt nach dem in der Beschreibung offenbarten Messverfahren, aufweist.

2. Harzzusammensetzung nach Anspruch 1, **dadurch gekennzeichnet, dass** die gesättigte aliphatische Dicarbonsäure die folgende Formel HOOC-(CH₂)ₓ-COOH aufweist, in welcher x für eine ganze Zahl von 1 bis 20 steht.

3. Harzzusammensetzung nach Anspruch 2, **dadurch gekennzeichnet, dass** x für 4 steht.

4. Harzzusammensetzung nach einem der Ansprüche 1-3, **dadurch gekennzeichnet, dass** die Harzzusammensetzung ein ungesättigtes Polyesterharz umfasst.

5. Harzzusammensetzung nach einem der Ansprüche 1-4, **dadurch gekennzeichnet, dass** das gesättigte Polymer eine durch Kettenverlängerung erhaltene bimodale Molekulargewichtsverteilung hat.

6. Harzzusammensetzung nach einem der Ansprüche 1-5, **dadurch gekennzeichnet, dass** die Zusammensetzung ein gesättigtes Polymer mit der folgenden Struktur 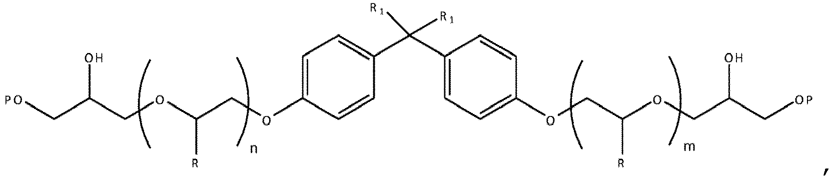 in welcher R, R₁=H oder CH₃, n, m für eine ganze Zahl von 0 bis 20 steht und P=Polymer mit Isosorbid-Bausteinen, umfasst.

7. Harzzusammensetzung nach einem der Ansprüche 1-6, **dadurch gekennzeichnet, dass** die Zusammensetzung 10 bis 70 Gew.-% an Komponente (a), 5 bis 50 Gew.-% an Komponente (b) und 2 bis 70 Gew.-% an Komponente (c) umfasst (wobei die Gesamtmenge an (a), (b) und (c) 100 Gew.-% beträgt).

8. Verfahren zur radikalischen Härtung einer Zusammensetzung eines ungesättigten Polyesterharzes und/oder Vinylesterharzes nach einem der Ansprüche 1-7, **dadurch gekennzeichnet, dass** das Verfahren (i) das Zusammengeben der Zusammensetzung des ungesättigten Polyesterharzes und/oder Vinylesterharzes mit einem Radikalstarter und anschließend (ii) das radikalische Härten der Harzzusammensetzung umfasst.

9. Verfahren nach Anspruch 8, **dadurch gekennzeichnet, dass** das Härten durch Formpressen erfolgt.

10. Gehärtetes Teil, erhalten durch das Verfahren nach Anspruch 8 oder 9.

## Revendications

1. Composition de résine comprenant
(a) une résine de polyester insaturé et/ou une résine d'ester vinylique,
(b) un diluant réactif et
(c) un polymère saturé soluble dans le diluant réactif, soluble signifiant une solubilité d'au moins 10 g de polymère saturé par litre de diluant réactif à 23 °C et pression atmosphérique,
**caractérisée en ce que** le polymère saturé est un polyester saturé qui comprend des éléments de structure de type isosorbide, d'autres éléments de structure de type diol et des éléments de structure de type acide dicarboxylique aliphatique saturé, la quantité molaire d'isosorbide par rapport à la quantité molaire d'acides dicarboxyliques aliphatiques étant de 1:10 jusqu'à 10:1 et lequel polyester saturé a une masse moléculaire moyenne en nombre Mₙ, telle que déterminée par la méthode de mesure exposée dans la description, d'au moins 1500 daltons.

2. Composition de résine selon la revendication 1, **caractérisée en ce que** l'acide dicarboxylique aliphatique saturé répond à la formule suivante HOOC-(CH₂)ₓ-COOH, dans laquelle x est un nombre entier de 1 jusqu'à 20.

3. Composition de résine selon la revendication 2, **caractérisée en ce que** x vaut 4.

4. Composition de résine selon l'une quelconque des revendications 1-3, **caractérisée en ce que** la composition de résine comprend une résine de polyester insaturé.

5. Composition de résine selon l'une quelconque des revendications 1-4, **caractérisée en ce que** le polymère saturé a une distribution bimodale de la masse moléculaire obtenue par allongement de chaîne.

6. Composition de résine selon l'une quelconque des revendications 1-5, **caractérisée en ce que** la composition comprend un polymère saturé ayant la structure suivante 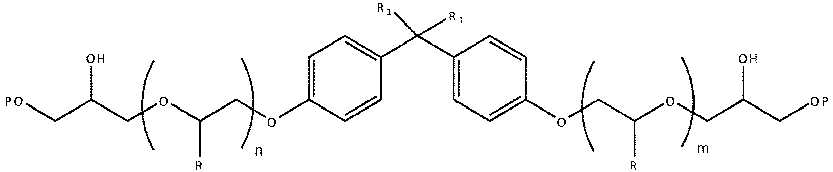 dans laquelle R, R₁ = H ou CH₃ ; n, m sont chacun un nombre entier de 0 jusqu'à 20 et P = un polymère contenant des éléments de structure de type isosorbide.

7. Composition de résine selon l'une quelconque des revendications 1-6, **caractérisée en ce que** la composition comprend de 10 jusqu'à 70 % en poids de composant (a), de 5 jusqu'à 50 % en poids de composant (b) et de 2 jusqu'à 70 % en poids de composant (c) (la quantité totale de (a), (b) et (c) étant considérée comme étant de 100 % en poids).

8. Procédé pour le durcissement par voie radicalaire d'une composition de résine de polyester insaturé et/ou de résine d'ester vinylique selon l'une quelconque des revendications 1-7, **caractérisé en ce que** le procédé comprend
(i) la combinaison de la composition de résine de polyester insaturé et/ou de résine d'ester vinylique avec un initiateur de radicaux libres puis
(ii) le durcissement de la composition de résine par voie radicalaire.

9. Procédé selon la revendication 8, **caractérisé en ce que** le durcissement est effectué par moulage par compression.

10. Pièce durcie obtenue par le procédé selon la revendication 8 ou 9.
